# EUROPEAN PATENT APPLICATION

(11) **EP 4 760 952 A1**
(43) Date of publication of application: **17.06.2026**
(21) Application number: 24938593.1
(22) Date of filing: 21.11.2024
(51) Int. Cl.: H01M 50/446, H01M 50/46, H01M 10/0525

(54) **BATTERY CELL SUITABLE FOR SECONDARY BATTERY, AND SECONDARY BATTERY USING SAME**

(30) Priority: 16.05.2024 CN 202410613221
(71) Applicant: Eve Power Co., Ltd., Jingmen, Hubei 448000 (CN)
(72) Inventor: LIU, Fanfen, Jingmen, Hubei 448000 (CN); JIN, Lun, Jingmen, Hubei 448000 (CN); ZENG, Hongchun, Jingmen, Hubei 448000 (CN); LIU, Qingsong, Jingmen, Hubei 448000 (CN); FU, Hang, Jingmen, Hubei 448000 (CN); YUAN, Dingding, Jingmen, Hubei 448000 (CN)
(74) Representative: Zhu, Puxing
(86) International application number: PCT/CN2024/133574
(87) International publication number: WO 2025/236587

(57) **Abstract**

A battery cell, applicable to a secondary battery, includes at least one composite electrode unit; the composite electrode unit includes a positive electrode sheet and a negative electrode sheet; the positive electrode sheet includes a first positive active coating (4), the negative electrode sheet includes a first negative active coating (2), and the first positive active coating (4) and the first negative active coating (2) are stacked with an isolation coating (3) therebetween; a length and a width of the first negative active coating (2) are respectively greater than a length and a width of the first positive active coating (4); the isolation coating (3) includes an inorganic material and a polymer, a proportion of the inorganic material in the isolation coating (3) is not less than 70 wt%, a dielectric constant of the inorganic material is not less than 8, and an average particle size D50 of the inorganic material ranges from 0.2 µm to 5 µm.

## Description

This application claims priority to Chinese Patent Application No. 202410613221.X, filed on May 16, 2024, the entire contents of which are incorporated herein by reference.

### TECHNICAL FIELD

The present application relates to the field of battery technologies, and in particular, to a battery cell applicable to a secondary battery and a secondary battery using the battery cell.

### BACKGROUND

Lithium-ion batteries have advantages such as high specific energy, low discharge, and good cycle performance, and have been widely applied in fields such as consumer electronics, new energy vehicles, and energy storage power stations. In order to meet market demands, the development of lithium-ion batteries with high energy density, high fast charging efficiency, cycle stability, and high safety performance has become a future trend. The lithium-ion battery includes a battery cell including positive and negative electrode sheets and a diaphragm separating the positive and negative electrode sheets. The diaphragm functions to isolate the positive and negative electrode sheets, so that electrons in the battery cannot freely pass through, and ions in the electrolyte can freely pass between the positive and negative electrode sheets, thereby ensuring the safety of the battery.

### SUMMARY

### TECHNICAL PROBLEMS

Conventional battery diaphragms are generally made of resin materials such as polyethylene or polypropylene, which have disadvantages of poor mechanical strength, easy puncture, poor thermal stability, causing battery bulging or explosion, etc.

### TECHNICAL SOLUTIONS

According to a first aspect, the present application provides a battery cell applicable to a secondary battery. The battery cell includes at least one composite electrode unit, and the composite electrode unit includes a positive electrode sheet and a negative electrode sheet; in the composite electrode unit, the positive electrode sheet includes a first positive active coating disposed facing the negative electrode sheet, the negative electrode sheet includes a first negative active coating disposed facing the positive electrode sheet, and the first positive active coating and the first negative active coating are stacked with an isolation coating therebetween; a length and a width of the first negative active coating are respectively greater than a length and a width of the first positive active coating; and the isolation coating includes an inorganic material and a polymer, a proportion of the inorganic material in the isolation coating is not less than 70 wt%, a dielectric constant of the inorganic material is not less than 8, and an average particle size D50 of the inorganic material ranges from 0.2 µm to 5 µm.

According to a second aspect, the present application provides a secondary battery, and the secondary battery includes the foregoing battery cell.

### BENEFICIAL EFFECTS

In the present application, a diaphragm in the secondary battery is replaced with the isolation coating located on the surface of the positive electrode sheet and/or the surface of the negative electrode sheet, so that the direct contact between the positive electrode sheet and the negative electrode sheet caused by thermal shrinkage of the diaphragm can be avoided, the probability of a short circuit in the secondary battery is reduced, and the safety performance of the secondary battery is improved. By comprehensively regulating the proportion of the inorganic material in the isolation coating and the particle size and the dielectric constant of the inorganic material, the isolation coating is enabled to not only possess excellent electronic insulation and ion transmission efficiency, but also have good thermal stability and structural stability. On the one hand, by effectively regulating the proportion, the particle size, and the dielectric constant of the inorganic material, the ion mobility, the mechanical property, the insulation performance, and the chemical stability of the isolation coating can be improved, the regional difference in lithium ion transport is reduced, and the secondary battery has excellent cycle stability.

On the other hand, by leveraging the viscosity of the polymer, the inorganic material can form the isolation coating with a stable structure and excellent insulation performance, and the insulating coating is not prone to thermal shrinkage and fall off from the surface of the electrode sheet in a high-temperature environment. By replacing the diaphragm in the secondary battery with the isolation coating with the excellent insulation performance, the thermal stability of the secondary battery can be improved, the secondary battery can maintain the normal transmission of lithium ions during the cycling process of the battery, and the direct contact between the conductive components in the positive and negative electrode sheets can be effectively prevented, thereby reducing the probability of self-discharge of the secondary battery and avoiding the short circuit inside the battery.

In addition, by designing the lengths and widths of the first negative active coating and the first positive active coating, the first negative active coating can completely cover the first positive active coating during the stacking or winding process of the negative electrode sheet and the positive electrode sheet, that is, a projection of the first positive active coating on the isolation coating completely falls within a range of a projection of the first negative active coating on the isolation coating, thereby reducing the possibility of lithium dendrite formation. In the high-temperature environment of 200 °C or below, the secondary battery provided in the present application is not prone to thermal runaway, and can maintain normal operation for a long time.

### BRIEF DESCRIPTION OF DRAWINGS

FIG. 1 is a schematic structural diagram of a composite electrode unit in a secondary battery provided in Embodiment 1 to Embodiment 10.
FIG. 2 is a schematic structural diagram of a composite electrode unit in a secondary battery provided in Embodiment 11.
FIG. 3 is a schematic structural diagram of a composite electrode unit in a secondary battery provided in Embodiment 12.

The corresponding relationship of the above reference numerals is: 1, negative current collector; 2, first negative active coating; 3, isolation coating; 4, first positive active coating; 5, positive current collector.

### EMBODIMENTS OF THE INVENTION

In some embodiments, the polymer includes at least one of a polymeric binder and a polymer binder.

In some embodiments, a proportion of the inorganic material in the isolation coating ranges from 70 wt% to 98.5 wt%.

In some embodiments, a specific surface area of the inorganic material ranges from 1 g/m² to 20 g/m². The inorganic material having the specific surface area within the above range is applied together with the polymer serving as the binder to prepare the isolation coating, which can improve the insulation performance, ion conduction efficiency, and electrolyte wettability of the insulating coating. In this way the electrolyte wettability of the secondary battery is improved on the premise of reducing the self-discharge probability of the secondary battery and avoiding the short circuit of the positive and negative electrode sheets, thereby shortening the lithium ion transmission path.

In some embodiments, a dielectric constant of the inorganic material ranges from 8 to 7000.

In some embodiments, the inorganic material includes at least one of boehmite, aluminum oxide (Al₂O₃), barium titanate (BaTiO₃), tin oxide (SnO₂), cerium oxide (CeO₂), magnesium oxide (MgO), nickel oxide (NiO), calcium oxide (CaO), zinc oxide (ZnO), zirconium dioxide (ZrO₂), yttrium oxide (Y₂O₃), silicon carbide (SiC), and titanium dioxide (TiO₂).

In some embodiments, a thickness of the isolation coating ranges from 2 µm to 50 µm. When the thickness of the isolation coating is within the foregoing range, the insulation performance and lithium ion transmission efficiency of the isolation coating can be improved, so that not only the lithium ion transmission path can be shortened, the lithium ion transmission efficiency can be improved, thereby improving charging and discharging performance of the battery, but also back-and-forth movement of small particles such as a conductive agent and the binder in the first positive active coating and/or the first negative active coating can be reduced in the isolation coating, thereby avoiding the short circuit inside the battery. Under the condition that the thickness of the isolation coating is too thin, the lithium ions and small particle components (such as binder, conductive agent, etc.) in the positive and negative electrode sheets are easy to shuttle back and forth in the isolation coating, which may reduce the insulation performance of the isolation coating and easily cause self-discharge of the battery cell, and the gas generated during the battery cycle is easy to impact the excessively thin isolation coating to damage and fall off, resulting in direct contact between the positive and negative electrode sheets and short circuit. Under the condition that the thickness of the isolation coating is too thick, the lithium ion transmission path is relatively long, the charge-discharge performance efficiency of the secondary battery is reduced, and the energy density of the secondary battery is reduced.

In some embodiments, in the isolation coating according to a weight ratio, the inorganic material : the polymer = (5.0 - 29.5) : (0.5 - 2.0). Under the condition that the weight ratio of the inorganic material to the polymer in the isolation coating falls within the above range, the lithium ion transmission rate can be improved, the charge-discharge cycle performance of the secondary battery can be improved, and the adhesive effect between the isolation coating and the electrode sheet can also be improved, so that the isolation coating is enabled to maintain the positive electrode sheet and the negative electrode sheet isolated during the cycling process of the battery, thereby reducing the probability of short circuit in the battery and improving the safety performance of the secondary battery.

In some embodiments, the polymer includes at least one of polyvinylidene fluoride, polyimide, polyacrylic acid, polyacrylate, styrene-butadiene rubber, carboxymethyl cellulose, polyethylene oxide, polyacrylonitrile, and polymethyl methacrylate. By applying the above polymer as the binder of the isolation coating, good flexibility and rigidity can be provided for the isolation coating, and the adhesive effect between the isolation coating and the first positive active coating and/or the first negative active coating can be improved, thereby improving the structural stability of the secondary battery during the cycling process and improving the cycle capacity retention rate and cycle stability of the secondary battery.

In some embodiments, a chemical structure of the polymer includes at least one of phenylenyl, amido, propionic acid, and vinylidene fluoride. The polymer with the above structure possess excellent conductive salt dissolution ability, chain segment flexibility, and heat resistance; on the one hand, it can promote the dissociation of the lithium salt in the electrolyte into lithium ions, thereby improving the transport number of the lithium ions in the secondary battery, and on the other hand, it can improve the adhesion performance between the polymer and the inorganic material, so that the isolation coating formed thereby has better structural stability and ion transmission efficiency, thereby improving the thermal stability and cycle performance of the secondary battery.

In some embodiments, the composite electrode unit satisfies a and/or b: a, the positive electrode sheet includes a positive current collector, a first positive active coating, and an isolation coating that are sequentially combined; b, the negative electrode sheet includes a negative current collector, a first negative active coating, and an isolation coating that are sequentially combined.

In some embodiments, the isolation coating includes a first isolation coating and a second isolation coating.

In some embodiments, the positive electrode sheet further includes a second positive active coating.

In some embodiments, the negative electrode sheet further includes a second negative active coating.

The composite electrode unit satisfies a and/or b: a, the positive electrode sheet includes the second isolation coating, the second positive active coating, the positive current collector, the first positive active coating, and the first isolation coating that are sequentially combined; and b, the negative electrode sheet includes the second isolation coating, the second negative active coating, the negative current collector, the first negative active coating, and the first isolation coating that are sequentially combined.

In some embodiments, the preparation of the isolation coating includes the following steps: S1, mixing the inorganic material, the polymer, and a solvent according to a weight ratio of the inorganic material : the polymer : the solvent = (5.0 - 29.5) : (0.5 - 2.0) : (70 - 95) to prepare a coating slurry; and S2, coating the coating slurry on a surface of the first positive active coating and/or a surface of the first negative active coating to form the isolation coating. By comprehensively regulating the average particle size D50 of the inorganic material and the composition of the isolation slurry, the processing performance, application uniformity, and storage stability of the isolation slurry are improved, which ensures the prepared isolation coating to have higher uniformity and better structural stability, and the surface flatness of the isolation coating formed by the isolation slurry and the distribution uniformity of the inorganic material inside the isolation coating are improved, thereby avoiding regional differences in lithium ion transport and reducing the polarization growth rate of the secondary battery. In addition, during the process of curing the isolation slurry, as the solvent gradually evaporates, the inorganic material within the above particle size range can settle to the surface of the first positive active coating and/or the surface of the first negative active coating, so that the isolation coating is not easy to fall off, the interface impedance can be reduced, and the cycle performance of the secondary battery can be improved.

In some embodiments, the solvent includes at least one of N-methylpyrrolidone, deionized water, ethanol, acetone, and dimethylformamide. The above solvent has better compatibility with the inorganic material and the polymer, and the prepared isolation slurry has moderate leveling property and viscosity, which is conducive to improving the storage stability of the isolation slurry and reducing the preparation difficulty of the isolation coating. In particular, the isolation slurry can be stored for a relatively long time, leaving enough coating time for the preparation process.

In some embodiments, when the composite electrode unit satisfies a, a single-sided coating surface density of the first positive active coating ranges from 50 g/m² to 500 g/m²; and when the composite electrode unit satisfies b, the single-sided coating surface density of the first negative active coating ranges from 20 g/m² to 300 g/m². When the above conditions are met, it is easier to match the active sites of the first positive active coating and/or the first negative active coating with the lithium ion transport sites of the isolation coating, thereby improving the ion transmission efficiency of the secondary battery and the cycle performance of the battery.

In some embodiments, the secondary battery includes an electrolyte, and an injection coefficient of the electrolyte ranges from 0.5 g/Ah to 8.0 g/Ah.

In some embodiments, the secondary battery is manufactured by means of cutting and stacking and/or winding.

### Embodiment 1

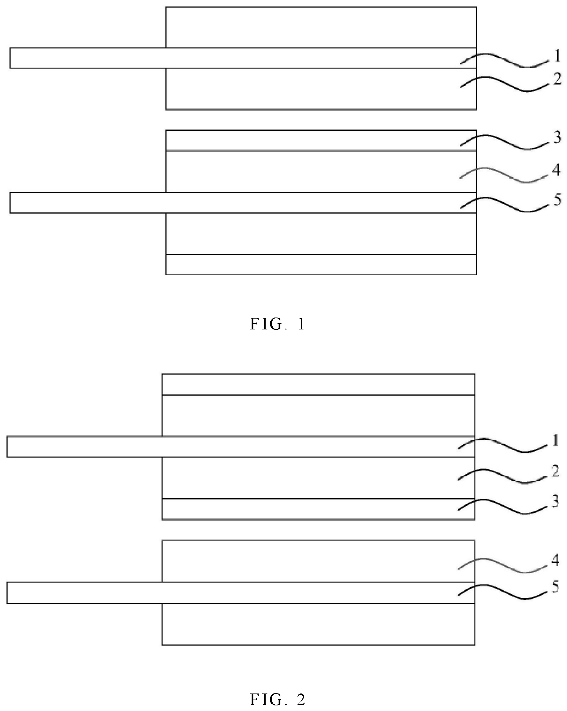

This embodiment provides the secondary battery including a specific structure shown in FIG. 1, and the isolation coating 3 in this embodiment includes a first isolation coating and a second isolation coating.

### (1) Positive Electrode Sheet

The positive electrode sheet provided in this embodiment includes the first isolation coating, the first positive active coating 4, the positive current collector 5, the second positive active coating, and the second positive isolation coating that are sequentially disposed. The first positive active coating 4 and the second positive active coating are prepared from a positive active slurry, and the first isolation coating and the second isolation coating are prepared from an isolation slurry. The positive current collector 5 is an aluminum foil.

The isolation slurry includes the inorganic material, the polymer, and the solvent, and a weight ratio of the inorganic material to the polymer to the solvent is 13.5:1.5:85, so that a proportion of the inorganic material in the isolation coating is 90 wt%, and the inorganic material is made of aluminum oxide with the D50 of 1.5 µm, the dielectric constant of 10.5, and the specific surface area of 6 g/m². The polymer is polyvinylidene fluoride PVDF, and the solvent is N-methylpyrrolidone (NMP).

The positive active slurry includes a positive active material, a binder, and a conductive agent. The positive active material is lithium iron phosphate, the conductive agent is conductive carbon black and carbon nanotubes, the binder is polyvinylidene fluoride PVDF. According to a weight ratio, the positive active material : the conductive carbon black : the carbon nanotubes : the binder = 96:1.0:1.0:2.

A specific preparation method of the positive electrode sheet includes:
S0, uniformly mixing raw materials applied to prepare the positive active slurry, coating the mixed raw materials on two oppositely arranged surfaces of the positive current collector 5, and drying to obtain the first positive active coating 4, the positive current collector 5, and the second positive active coating that are sequentially combined;
S1, mixing the inorganic material, the polymer, and the solvent according to a weight ratio of inorganic material : polymer : solvent = 13.5:1.5:85 to prepare the coating slurry; and
S2, coating the coating slurry respectively on surfaces of the first positive active coating 4 and the second positive active coating to obtain slurry coatings, and drying the solvent in the slurry coatings to form the first isolation coating and the second isolation coating. The positive electrode sheet is thus prepared. In the positive electrode sheet, the thickness of the first isolation coating is 5 µm, and the thickness of the second isolation coating is 5 µm.

### (2) Negative Electrode Sheet

The negative electrode sheet includes the first negative active coating 2, the negative current collector 1, and the second negative active coating that are sequentially disposed. The negative current collector 1 is a copper foil, and the first negative active coating 2 and the second negative active coating are prepared from a negative active slurry. The negative active slurry includes a negative active material, a binder, a thickener, and a conductive agent. According to a weight ratio, the negative active material : the binder : the thickener : the conductive agent = 96:1.0:1.5:1.5. The negative active material is graphite, the binder is styrene-butadiene rubber, the thickener is carboxymethyl cellulose, and the conductive agent is conductive carbon black.

A specific preparation method includes:
uniformly mixing raw materials applied to prepare the negative active slurry, coating the mixed raw materials on two oppositely arranged surfaces of the negative current collector 1, and drying to obtain the first negative active coating 2, the negative current collector 1, and the second negative active coating that are sequentially combined, thereby forming the negative electrode sheet.

### (3) Secondary Battery

A surface of the first isolation coating of the positive electrode sheet is stacked to face a surface of the first negative active coating 2 of the negative electrode sheet, so that the first positive active coating 4 and the first negative active coating 2 are stacked with the isolation coating 3 therebetween. The length and width of the first negative active coating 2 are respectively greater than the length and width of the first positive active coating 4. The negative electrode sheet winds around the positive electrode sheet in the above stacking sequence to form the composite electrode unit. The composite electrode unit is processed through the stacking process to obtain the battery cell applicable to the secondary battery. The battery cell is placed in an outer packaging shell, they are dried, the electrolyte is injected according to an electrolyte injection coefficient of 6.8 g/Ah, and then the processes of vacuum packaging, standing, formation, and capacity grading are performed to obtain the secondary battery.

### Embodiment 2

In this embodiment, reference is made to the preparation method provided in Embodiment 1 to prepare the secondary battery, and this embodiment differs from Embodiment 1 in that: aluminum oxide with the particle size D50 of 0.2 µm is selected to replace the inorganic material in Embodiment 1 during the process of preparing the isolation coating 3. The weight ratio of other raw materials and preparation methods are strictly the same as those in Embodiment 1.

### Embodiment 3

In this embodiment, reference is made to the preparation method provided in Embodiment 1 to prepare the secondary battery, and this embodiment differs from Embodiment 1 in that: aluminum oxide with the particle size D50 of 5 µm is selected to replace the inorganic material in Embodiment 1 during the process of preparing the isolation coating 3. The weight ratio of other raw materials and preparation methods are strictly the same as those in Embodiment 1.

### Embodiment 4

In this embodiment, reference is made to the preparation method provided in Embodiment 1 to prepare the secondary battery, and this embodiment differs from Embodiment 1 in that: during the process of preparing the isolation slurry, the weight ratio of the inorganic material to the polymer to the solvent is 29.5:0.5:70, thus the proportion of the inorganic material in the isolation coating 3 is 98.3 wt%. The weight ratio of other raw materials and preparation methods are strictly the same as those in Embodiment 1.

### Embodiment 5

In this embodiment, reference is made to the preparation method provided in Embodiment 1 to prepare the secondary battery, and this embodiment differs from Embodiment 1 in that: during the process of preparing the isolation coating 3, the weight ratio of the inorganic material to the polymer is 5:2:93, thus the proportion of the inorganic material in the isolation coating 3 is 71.5 wt%. The weight ratio of other raw materials and preparation methods are strictly the same as those in Embodiment 1.

### Embodiment 6

In this embodiment, reference is made to the preparation method provided in Embodiment 1 to prepare the secondary battery, and this embodiment differs from Embodiment 1 in that: during the process of preparing the positive electrode sheet, the coating amount of the isolation slurry is adjusted to ensure the thickness of the first isolation coating and the thickness of the second isolation coating to be 2 µm. The weight ratio of other raw materials and preparation methods are strictly the same as those in Embodiment 1.

### Embodiment 7

In this embodiment, reference is made to the preparation method provided in Embodiment 1 to prepare the secondary battery, and this embodiment differs from Embodiment 1 in that: during the process of preparing the positive electrode sheet, the coating amount of the isolation slurry is adjusted to ensure the thickness of the first isolation coating and the thickness of the second isolation coating to be 10 µm. The weight ratio of other raw materials and preparation methods are strictly the same as those in Embodiment 1.

### Embodiment 8

In this embodiment, reference is made to the preparation method provided in Embodiment 1 to prepare the secondary battery, and this embodiment differs from Embodiment 1 in that: during the process of preparing the positive electrode sheet, the coating amount of the isolation slurry is adjusted to ensure the thickness of the first isolation coating and the thickness of the second isolation coating to be 50 µm. The weight ratio of other raw materials and preparation methods are strictly the same as those in Embodiment 1.

### Embodiment 9

In this embodiment, reference is made to the preparation method provided in Embodiment 1 to prepare the secondary battery, and this embodiment differs from Embodiment 1 in that: deionized water of the same weight is selected to replace the solvent in Embodiment 1 during the process of preparing the isolation coating 3. The weight ratio of other raw materials and preparation methods are strictly the same as those in Embodiment 1.

### Embodiment 10

In this embodiment, reference is made to the preparation method provided in Embodiment 1 to prepare the secondary battery, and this embodiment differs from Embodiment 1 in that: dimethylacetamide of the same weight is selected to replace the solvent in Embodiment 1 during the process of preparing the isolation coating. The weight ratio of other raw materials and preparation methods are strictly the same as those in Embodiment 1.

### Embodiment 11

This embodiment provides the secondary battery including a specific structure shown in FIG. 2, and the isolation coating in this embodiment includes a third isolation coating and a fourth isolation coating.

### (1) Positive Electrode Sheet

The positive electrode sheet includes the first positive active coating 4, the positive current collector 5, and the second positive active coating that are sequentially disposed. The positive current collector 5 is an aluminum foil, and the first positive active coating 4 and the second positive active coating are prepared from a positive active slurry. The positive active slurry includes a positive active material, a binder, and a conductive agent. The positive active material is lithium iron phosphate, the conductive agent is conductive carbon black and carbon nanotubes, the binder is polyvinylidene fluoride PVDF. According to a weight ratio, the positive active material : the conductive carbon black : the carbon nanotubes : the binder = 96:1.0:1.0:2.

A specific preparation method includes:
uniformly mixing raw materials applied to prepare the positive active slurry, coating the mixed raw materials on two oppositely arranged surfaces of the positive current collector 5, and drying to obtain the first positive active coating 4, the positive current collector 5, and the second positive active coating that are sequentially combined, thereby forming the positive electrode sheet.

### (2) Negative Electrode Sheet

The negative electrode sheet provided in this embodiment includes the first isolation coating, the first negative active coating 2, the negative current collector 1, the second negative active coating, and the second isolation coating that are sequentially disposed. The first active coating and the second active coating are prepared from the negative active slurry, and the third isolation coating and the fourth isolation coating are prepared from the isolation slurry. The negative current collector 1 is a copper foil.

The isolation slurry includes an inorganic material, a polymer, and a solvent, and a weight ratio of the inorganic material to the polymer to the solvent is 5:2:93. The inorganic material is aluminum oxide with the D50 of 1.5 µm, the dielectric constant of 10.5, and the specific surface area of 6 g/m². The polymer is polyvinylidene fluoride PVDF, and the solvent is N-methylpyrrolidone.

The negative active slurry includes a negative active material, a binder, a thickener, and a conductive agent, and according to a weight ratio, the negative active material : the binder : the thickener : the conductive agent = 96:1.0:1.5:1.5. The negative active material is graphite, the binder is styrene-butadiene rubber, the thickener is carboxymethyl cellulose, and the conductive agent is conductive carbon black.

A specific preparation method of the negative electrode sheet includes:
S0, uniformly mixing raw materials applied to prepare the negative active slurry, coating the mixed raw materials on two oppositely arranged surfaces of the negative current collector 1, and drying to obtain the first negative active coating 2, the negative current collector 1, and the second negative active coating that are sequentially combined;
S1, mixing the inorganic material, the polymer, and the solvent according to a weight ratio of inorganic material : polymer : solvent = 13.5:1.5:85 to prepare the coating slurry; and
S2, coating the coating slurry respectively on surfaces of the first negative active coating 2 and the second negative active coating to obtain slurry coatings, and drying the solvent in the slurry coatings to form the third isolation coating and the fourth isolation coating. The negative electrode sheet is thus prepared. In the negative electrode sheet, the thickness of the third isolation coating is 5 µm, and the thickness of the fourth isolation coating is 5 µm.

### (3) Secondary Battery

A surface of the third isolation coating of the negative electrode sheet is stacked to face a surface of the first positive active coating 4 of the positive electrode sheet, so that the first positive active coating 4 and the first negative active coating 2 are stacked with the isolation coating 3 therebetween. The length and width of the first negative active coating 2 are respectively greater than the length and width of the first positive active coating 4. The negative electrode sheet winds around the positive electrode sheet in the above stacking sequence to form the composite electrode unit. The composite electrode unit is processed through the stacking process to obtain the battery cell applicable to the secondary battery. The battery cell is placed in an outer packaging shell, they are dried, the electrolyte is injected according to an electrolyte injection coefficient of 6.8 g/Ah, and then the processes of vacuum packaging, standing, formation, and capacity grading are performed to obtain the secondary battery. The diaphragm is EJ 9+2+2 model.

### Embodiment 12

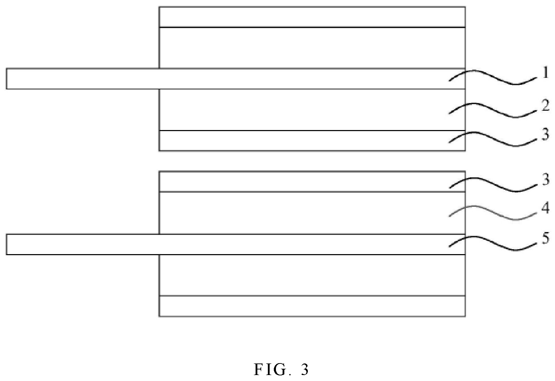

This embodiment provides the secondary battery including a specific structure shown in FIG. 3, and the isolation coating in this embodiment includes a first isolation coating, a second isolation coating, a third isolation coating, and a fourth isolation coating.

### (1) Positive Electrode Sheet

The positive electrode sheet provided in this embodiment includes the first isolation coating, the first positive active coating 4, the positive current collector 5, the second positive active coating, and the second positive isolation coating that are sequentially disposed. The first positive active coating 4 and the second positive active coating are prepared from the positive active slurry, and the first isolation coating and the second isolation coating are prepared from the isolation slurry. The positive current collector 5 is an aluminum foil.

The isolation slurry includes the inorganic material, the polymer, and the solvent, and a weight ratio of the inorganic material to the polymer to the solvent is 13.5:1.5:85, so that a proportion of the inorganic material in the isolation coating is 90 wt%, and the inorganic material is made of aluminum oxide with the D50 of 1.5 µm, the dielectric constant of 10.5, and the specific surface area of 6 g/m². The polymer is polyvinylidene fluoride PVDF, and the solvent is N-methylpyrrolidone.

The positive active slurry includes a positive active material, a binder, and a conductive agent. The positive active material is lithium iron phosphate, the conductive agent is conductive carbon black and carbon nanotubes, the binder is polyvinylidene fluoride PVDF. According to a weight ratio, the positive active material : the conductive carbon black : the carbon nanotubes : the binder = 96:1.0:1.0:2.

A specific preparation method of the positive electrode sheet includes:
S0, uniformly mixing raw materials applied to prepare the positive active slurry, coating the mixed raw materials on two oppositely arranged surfaces of the positive current collector 5, and drying to obtain the first positive active coating 4, the positive current collector 5, and the second positive active coating that are sequentially combined;
S1, mixing the inorganic material, the polymer, and the solvent according to a weight ratio of inorganic material : polymer : solvent = 13.5:1.5:85 to prepare the coating slurry; and
S2, coating the coating slurry respectively on surfaces of the first positive active coating 4 and the second positive active coating to obtain slurry coatings, and drying the solvent in the slurry coatings to form the first isolation coating and the second isolation coating. The positive electrode sheet is thus prepared. In the positive electrode sheet, the thickness of the first isolation coating is 5 µm, and the thickness of the second isolation coating is 5 µm.

### (2) Negative Electrode Sheet

The negative electrode sheet provided in this embodiment includes the third isolation coating, the first negative active coating 2, the negative current collector 1, the second negative active coating, and the fourth isolation coating that are sequentially disposed. The first active coating and the second active coating are prepared from the negative active slurry, and the third isolation coating and the fourth isolation coating are prepared from the isolation slurry. The negative current collector 1 is a copper foil.

The isolation slurry includes an inorganic material, a polymer, and a solvent, and a weight ratio of the inorganic material to the polymer to the solvent is 5:2:93. The inorganic material is aluminum oxide with the D50 of 1.5 µm, the dielectric constant of 10.5, and the specific surface area of 6 g/m². The polymer is polyvinylidene fluoride PVDF, and the solvent is N-methylpyrrolidone.

The negative active slurry includes a negative active material, a binder, a thickener, and a conductive agent, and according to a weight ratio, the negative active material : the binder : the thickener : the conductive agent = 96:1.0:1.5:1.5. The negative active material is graphite, the binder is styrene-butadiene rubber, the thickener is carboxymethyl cellulose, and the conductive agent is conductive carbon black.

A specific preparation method of the negative electrode sheet includes:
S0, uniformly mixing raw materials applied to prepare the negative active slurry, coating the mixed raw materials on two oppositely arranged surfaces of the negative current collector 1, and drying to obtain the first negative active coating 2, the negative current collector 1, and the second negative active coating that are sequentially combined;
S1, mixing the inorganic material, the polymer, and the solvent according to a weight ratio of inorganic material : polymer : solvent = 13.5:1.5:85 to prepare the coating slurry; and
S2, coating the coating slurry respectively on surfaces of the first negative active coating 2 and the second negative active coating to obtain slurry coatings, and drying the solvent in the slurry coatings to form the third isolation coating and the fourth isolation coating. The negative electrode sheet is thus prepared. In the negative electrode sheet, the thickness of the third isolation coating is 5 µm, and the thickness of the fourth isolation coating is 5 µm.

### (3) Secondary Battery

A surface of the third isolation coating of the negative electrode sheet is stacked to face a surface of the first isolation coating of the positive electrode sheet, so that the first positive active coating 4 and the first negative active coating 2 are stacked with the isolation coating therebetween. The length and width of the first negative active coating 2 are respectively greater than the length and width of the first positive active coating 4. The negative electrode sheet winds around the positive electrode sheet in the above stacking sequence to form the composite electrode unit. The composite electrode unit is processed through the stacking process to obtain the battery cell applicable to the secondary battery. The battery cell is placed in an outer packaging shell, they are dried, the electrolyte is injected according to an electrolyte injection coefficient of 6.8 g/Ah, and then the processes of vacuum packaging, standing, formation, and capacity grading are performed to obtain the secondary battery.

### Comparative Example 1

The secondary battery is prepared in this comparative example, and the specific preparation method is as follows:
(1) Positive Electrode Sheet

The positive electrode sheet provided in this embodiment includes the first positive active coating 4, the positive current collector 5, and the second positive active coating that are sequentially disposed. The first positive active coating 4 and the second positive active coating are prepared from a positive active slurry. The positive current collector 5 is an aluminum foil.

The positive active slurry includes a positive active material, a binder, and a conductive agent. The positive active material is lithium iron phosphate, the conductive agent is conductive carbon black and carbon nanotubes, the binder is polyvinylidene fluoride PVDF. According to a weight ratio, the positive active material : the conductive carbon black : the carbon nanotubes : the binder = 96:1.0:1.0:2.

A specific preparation method includes:
uniformly mixing raw materials applied to prepare the positive active slurry, coating the mixed raw materials on two oppositely arranged surfaces of the positive current collector 5, and drying to obtain the positive electrode sheet.

### (2) Negative Electrode Sheet

The negative electrode sheet includes the first negative active coating 2, the negative current collector 1, and the second negative active coating that are sequentially disposed. The negative current collector 1 is a copper foil, and the first negative active coating 2 and the second negative active coating are prepared from a negative active slurry. The negative active slurry includes a negative active material, a binder, a thickener, and a conductive agent. According to a weight ratio, the negative active material : the binder : the thickener : the conductive agent = 96:1.0:1.5:1.5. The negative active material is graphite, the binder is styrene-butadiene rubber, the thickener is carboxymethyl cellulose, and the conductive agent is conductive carbon black.

### A specific preparation method includes:

uniformly mixing raw materials applied to prepare the negative active slurry, coating the mixed raw materials on two oppositely arranged surfaces of the negative current collector 1, and drying to obtain the negative electrode sheet.

### (3) Secondary Battery

The positive electrode sheet, the diaphragm, and the negative electrode sheet are stacked in sequence, and thus the battery cell is obtained through the stacking process. The length and width of the first negative active coating 2 are respectively greater than the length and width of the first positive active coating 4. The battery cell is placed in an outer packaging shell, they are dried, the electrolyte is injected according to an electrolyte injection coefficient of 6.8 g/Ah, and then the processes of vacuum packaging, standing, formation, and capacity grading are performed to obtain the secondary battery. The diaphragm is EJ 9+2+2 model.

### Comparative Example 2

In this comparative example, reference is made to the preparation method provided in Embodiment 1 to prepare the secondary battery, and this comparative example differs from Embodiment 1 in that: aluminum oxide with the particle size D50 of 7 µm is selected to replace the inorganic material in Embodiment 1 during the process of preparing the isolation coating. The weight ratio of other raw materials and preparation methods are strictly the same as those in Embodiment 1.

### Comparative Example 3

In this comparative example, reference is made to the preparation method provided in Embodiment 1 to prepare the secondary battery, and this comparative example differs from Embodiment 1 in that: aluminum oxide with the particle size D50 of 0.1 µm is selected to replace the inorganic material in Embodiment 1 during the process of preparing the isolation coating. The weight ratio of other raw materials and preparation methods are strictly the same as those in Embodiment 1.

### Comparative Example 4

In this comparative example, reference is made to the preparation method provided in Embodiment 11 to prepare the secondary battery,

### (1) Positive Electrode Sheet

The processing methods and the ratio of raw materials for preparing the positive composite electrode sheet in this embodiment are strictly the same as the processing methods and the ratio of raw materials for preparing the positive electrode sheet in Embodiment 11. The positive electrode sheet includes the first positive active coating 4, the positive current collector 5, and the second positive active coating that are sequentially disposed.

### (2) Negative Electrode Sheet

The processing methods and the ratio of raw materials for preparing the positive composite electrode sheet in this embodiment are strictly the same as the processing methods and the ratio of raw materials for preparing the positive electrode sheet in Embodiment 11. The negative electrode sheet includes the first isolation coating, the first negative active coating 2, the negative current collector 1, the second negative active coating, and the second isolation coating that are sequentially disposed.

### (3) Secondary Battery

The positive electrode sheet, the diaphragm, and the negative electrode sheet are stacked in sequence, ensuring that a surface of the first isolation coating of the positive electrode sheet to face the diaphragm, thus the battery cell is obtained through the stacking process. The length and width of the first negative active coating 2 are respectively greater than the length and width of the first positive active coating 4. The battery cell is placed in an outer packaging shell, they are dried, the electrolyte is injected according to an electrolyte injection coefficient of 6.8 g/Ah, and then the processes of vacuum packaging, standing, formation, and capacity grading are performed to obtain the secondary battery. The diaphragm is EJ 9+2+2 model.

Performance tests are performed on the secondary batteries provided in Embodiment 1 to Embodiment 12 and Comparative Example 1 to Comparative Example 4.

### Test Projects and Test Methods:

### (1) Discharge Capacity Retention Rate

In a constant temperature environment of 25 °C, each secondary battery is left to stand for 24 hours after the formation process. Each secondary battery is charged to 3.65V at a constant current and voltage of 0.33 C, a cut-off current is 0.05 C; the secondary battery is then discharged to 2.5 V at a constant current of 0.33 C, and a discharge capacity C₁ is recorded. Then the secondary battery is charged to 3.65V at a constant current and voltage of 0.33 C, and a cut-off current is 0.05 C, and the secondary battery is allowed to stand for 7D at 60 °C; and then the secondary battery is discharged to 2.5 V at a constant current of 0.33 C, and a discharge capacity C₂ is recorded. Thus, the discharge capacity retention rate R = C₂/C₁ × 100%.

### (2) IMP Internal Resistance Test

In the constant temperature environment of 25 °C, each secondary battery is left to stand for 24 hours after the formation process, and then tested by a HIOKI voltage internal resistance meter.

### (3) Safety Performance Test

The safety performance of the secondary battery is verified through the hot-box test. During the test, a thermocouple is attached to the surface of the battery, the battery is placed in a hot box, and the battery is heated to a higher temperature at a heating rate of 5 ± 1 °C/min from an initial temperature (room temperature). The temperature of the hot box is required to be 200 °C, then constant at this temperature, and the change of the battery temperature with time is recorded. The time it takes for the battery to reach a constant temperature in the hot box of 200 °C until a thermal runaway (the internal exothermic reaction of the battery becomes uncontrolled, causing smoke and combustion) occurs is determined.

Test results: the material composition of the isolation coating in each secondary battery and the structure of each secondary battery are shown in Table 1, and the test results of each secondary battery are shown in Table 2.

**Table 1: Material Composition of isolation Coating in Each Secondary Battery and Structure of Secondary Battery**

| Groups | Composition materials of isolation coating | | | | Structure of battery |
|---|---|---|---|---|---|
| | Inorganic material D50 | Inorganic material : Polymer : Solvent | Solvent | Thickness of isolation coating | |
| Embodiment 1 | 1.5 µm | 13.5:1.5:85 | NMP | 5 µm | FIG. 1 |
| Embodiment 2 | 0.2 µm | 13.5:1.5:85 | NMP | 5 µm | FIG. 1 |
| Embodiment 3 | 5 µm | 13.5:1.5:85 | NMP | 5 µm | FIG. 1 |
| Embodiment 4 | 1.5 µm | 29.5:0.5:70 | NMP | 5 µm | FIG. 1 |
| Embodiment 5 | 1.5 µm | 5:2:93 | NMP | 5 µm | FIG. 1 |
| Embodiment 6 | 1.5 µm | 13.5:1.5:85 | NMP | 2 µm | FIG. 1 |
| Embodiment 7 | 1.5 µm | 13.5:1.5:85 | NMP | 10 µm | FIG. 1 |
| Embodiment 8 | 1.5 µm | 13.5:1.5:85 | NMP | 50 µm | FIG. 1 |
| Embodiment 9 | 1.5 µm | 13.5:1.5:85 | Deionized water | 5 µm | FIG. 1 |
| Embodiment 10 | 1.5 µm | 13.5:1.5:85 | Dimethylac etamide | 5 µm | FIG. 1 |
| Embodiment 11 | 1.5 µm | 13.5:1.5:85 | NMP | 5 µm | FIG. 2 |
| Embodiment 12 | 1.5 µm | 13.5:1.5:85 | NMP | 5 µm | FIG. 3 |
| Comparative Example 1 | Including diaphragm and excluding isolation coating | | | | |
| Comparative Example 2 | 7 µm | 13.5:1.5:85 | NMP | 5 µm | FIG. 1 |
| Comparative Example 3 | 0.1 µm | 13.5:1.5:85 | NMP | 5 µm | FIG. 1 |
| Comparative Example 4 | 1.5 µm | 13.5:1.5:85 | NMP | 5 µm | Including diaphragm and including isolation coating |

**Table 2: Test Results of Secondary Batteries in Test Examples**

| Groups | Discharge capacity retention rate (%) | IMP (mΩ) | Thermal runaway time (min) |
|---|---|---|---|
| Embodiment 1 | 95.18 | 9.821 | 67 |
| Embodiment 2 | 95.21 | 9.845 | 77 |
| Embodiment 3 | 95.06 | 9.817 | 60 |
| Embodiment 4 | 95.01 | 9.691 | 63 |
| Embodiment 5 | 95.26 | 9.892 | 72 |
| Embodiment 6 | 94.86 | 9.801 | 58 |
| Embodiment 7 | 95.04 | 9.845 | 82 |
| Embodiment 8 | 95.35 | 9.924 | 104 |
| Embodiment 9 | 95.10 | 9.934 | 65 |
| Embodiment 10 | 95.09 | 9.985 | 63 |
| Embodiment 11 | 95.14 | 9.831 | 65 |
| Embodiment 12 | 95.34 | 9.915 | 71 |
| Comparative Example 1 | 94.25 | 9.834 | 12 |
| Comparative Example 2 | 93.24 | 9.724 | 22 |
| Comparative Example 3 | 94.82 | 10.524 | 79 |
| Comparative Example 4 | 95.07 | 12.698 | 68 |

### Results Analysis:

Comparing the test results of Embodiment 1 to Embodiment 12 and Comparative Example 1 to Comparative Example 4 in Table 2, it can be found that the comprehensive performance of the batteries provided in Embodiment 1 to Embodiment 12 is better than the comprehensive performance of the batteries provided in Comparative Example 1 to Comparative Example 4.

The battery provided in Embodiment 1 differs from the battery provided in Comparative Example 1 in that: the battery of Embodiment 1 includes the isolation coating 3 and does not include the diaphragm, while the battery of Comparative Example 1 does not include the isolation coating 3 but includes the diaphragm. By comparing the comprehensive performance of the batteries in Embodiment 1 and Comparative Example 1, it can be found that, compared with the battery including the diaphragm in Comparative Example 1, the battery provided in Embodiment 1 has a longer thermal runaway time and higher thermal stability. The diaphragm in Comparative Example 1 is prone to thermal shrinkage in the high-temperature environment, resulting in a short circuit between the positive and negative electrode sheets, and subsequently leading to thermal runaway.

Comparing the performance of the batteries in Embodiment 1 to Embodiment 3 and Comparative Example 2 to Comparative Example 3 in Table 2, it can be found that as the average particle size D50 of the inorganic material increases, the IMP internal resistance of the secondary battery shows a decreasing trend, and the thermal runaway time of the secondary battery shows a decreasing trend, that is, the ion transmission efficiency shows an increasing trend, and the insulation performance of the isolation coating 3 decreases. When the average particle size D50 of the inorganic material ranges from 0.2 µm to 5 µm, the isolation coating 3 has better insulation performance and higher ion transmission efficiency, and the secondary battery applying the isolation coating 3 has smaller IMP internal resistance and longer thermal runaway time. The battery provided in Comparative Example 2 can operate normally at room temperature, but is prone to failure at high temperature, and has a relatively low discharge capacity retention rate. This is because the average particle size D50 of the inorganic material applied in Comparative Example 2 is too large, the gaps in the isolation coating 3 are large, resulting in the self-discharge phenomenon in the battery during standing, and the small particle components in the positive and negative electrode sheets may shuttle back and forth in the gaps of the insulation coating 3. With the increase of temperature, the shuttle speed and shuttle amount of the small particle components increase, reducing the insulation performance of the isolation coating 3, so the battery provided in Comparative Example 2 can still operate normally in the normal temperature environment, but when in the high-temperature environment, the insulation of the isolation coating 3 decreases, and the battery provided in Comparative Example 2 is more prone to thermal runaway. The battery provided in Comparative Example 3 has a relatively high IMP internal resistance, which is due to the fact that the average particle size D50 of the inorganic material is too small. The inorganic material in the isolation coating 3 is stacked too closely, resulting in too small voids in the isolation coating 3 and hindered lithium ion transmission.

By comparing the secondary battery provided in Embodiment 11 with the secondary battery provided in Comparative Example 4, it can be found that the battery provided in Embodiment 11 differs from the battery provided in Comparative Example 4 in that: the battery in Embodiment 11 includes the isolation coating 3 and does not include the diaphragm, while the battery in Comparative Example 4 includes the isolation coating 3 and also includes the diaphragm. Compared with the battery provided in Comparative Example 4, the battery provided in Embodiment 10 has a lower IMP internal resistance, which is because the isolation coating in Embodiment 11 has better ion transmission efficiency, while the interface internal resistance between the diaphragm and the isolation coating 3 in Comparative Example 4 is relatively large, and lithium ion transport is hindered.

By comparing the performance of the batteries in Embodiment 1 and Embodiment 4 to Embodiment 5 in Table 2, it can be found that: when the weight ratio of the inorganic material to the polymer to the solvent in the isolation slurry is within the range of (5.0-29.5) : (0.5-2.0) : (70-95), the adhesion between the isolation coating 3 prepared from the isolation slurry and the first positive active coating 2 is strong; and as the proportion of the polymer is increased, the gaps in the isolation coating are reduced due to the increase of the polymer, resulting in the reduction of the lithium ion transmission channel and the relatively high IMP internal resistance of the secondary battery. By comparing the performance of the batteries in Embodiment 1 and Embodiment 6 to Embodiment 8 in Table 2, it can be found that: when the thickness of the isolation coating ranges from 2 µm to 50 µm, the isolation coating has excellent insulation performance and high lithium ion transmission efficiency, which is manifested in that the batteries provided in Embodiment 1 and Embodiment 6 to Embodiment 8 have small IMP internal resistance and long thermal runaway time. By comparing the performance of the batteries in Embodiment 1 and Embodiment 9 to Embodiment 10 in Table 2, it can be found that: the comprehensive performance of the batteries provided in Embodiment 1 and Embodiment 9 is lower than that of the battery provided in Embodiment 10, indicating that the applying of different solvents to prepare the isolation slurry may lead to different processing performance of the isolation slurry, thereby affecting the battery performance. When the solvent includes at least one of N-methylpyrrolidone, deionized water, ethanol, acetone, and dimethylformamide, the isolation slurry exhibits good processing performance. By comparing the comprehensive performance of the batteries provided in Embodiment 1 and Embodiment 11 to Embodiment 12, it can be found that: under the condition that the isolation coating 3 is coated on the first positive active coating 4 and/or that the isolation coating 3 is coated on the first negative active coating 2, the prepared secondary batteries can all operate normally and have good thermal stability.

## Claims

1. A battery cell, applicable to a secondary battery,
wherein the battery cell comprises at least one composite electrode unit, and the composite electrode unit comprises a positive electrode sheet and a negative electrode sheet;
in the composite electrode unit, the positive electrode sheet comprises a first positive active coating (4) disposed facing the negative electrode sheet, the negative electrode sheet comprises a first negative active coating (2) disposed facing the positive electrode sheet, the first positive active coating (4) and the first negative active coating (2) are stacked with an isolation coating (3) therebetween, and a length and a width of the first negative active coating (2) are respectively greater than a length and a width of the first positive active coating (4); and
the isolation coating (3) comprises an inorganic material and a polymer, a proportion of the inorganic material in the isolation coating (3) is not less than 70 wt%, a dielectric constant of the inorganic material is not less than 8, and an average particle size D50 of the inorganic material ranges from 0.2 µm to 5 µm.

2. The battery cell of claim 1, wherein a specific surface area of the inorganic material ranges from 1 g/m² to 20 g/m².

3. The battery cell of claim 1, wherein a thickness of the isolation coating (3) ranges from 2 µm to 50 µm.

4. The battery cell of claim 1, wherein in the isolation coating (3) according to a weight ratio, the inorganic material : the polymer = (5.0 - 29.5) : (0.5 - 2.0).

5. The battery cell of claim 1, wherein the polymer comprises at least one of polyvinylidene fluoride, polyimide, polyacrylic acid, polyacrylate, styrene-butadiene rubber, carboxymethyl cellulose, polyethylene oxide, polyacrylonitrile, and polymethyl methacrylate.

6. The battery cell of any one of claim 1 to claim 5, wherein the composite electrode unit satisfies a and/or b:
a, the positive electrode sheet comprises a positive current collector (5), the first positive active coating (4), and the isolation coating (3) sequentially combined;
b, the negative electrode sheet comprises a negative current collector (1), the first negative active coating (2), and the isolation coating (3) sequentially combined.

7. The battery cell of claim 6, wherein a preparation of the isolation coating (3) comprises following steps:
S1, mixing the inorganic material, the polymer, and a solvent according to a weight ratio of the inorganic material : the polymer : the solvent = (5.0 - 29.5) : (0.5 - 2.0) : (70 - 95) to prepare a coating slurry; and
S2, coating the coating slurry on a surface of the first positive active coating (4) and/or a surface of the first negative active coating (2) to form the isolation coating (3).

8. The battery cell of claim 7, wherein the solvent comprises at least one of N-methylpyrrolidone, deionized water, ethanol, acetone, and dimethylformamide.

9. The battery cell of claim 6,
wherein when the composite electrode unit satisfies a, a single-sided coating surface density of the first positive active coating (4) ranges from 50 g/m² to 500 g/m²; and
wherein when the composite electrode unit satisfies b, the single-sided coating surface density of the first negative active coating (2) ranges from 20 g/m² to 300 g/m².

10. A secondary battery, wherein the secondary battery comprises the battery cell of any one of claim 1 to claim 9.
